# EUROPEAN PATENT SPECIFICATION

(11) **EP 0 518 427 B1**
(45) Date of publication and mention of the grant of the patent: **30.08.1995**
(21) Application number: 92201644.9
(22) Date of filing: 05.06.1992
(51) Int. Cl.: G01V 1/157, G01V 1/40

(54) **Hydrogen-oxygen acoustic logging device and method**
Akustische Wasserstoff-Sauerstoff-Bohrlochmesseinrichtung und Verfahren
Appareil et méthode acoustique de diagraphie de trou par moyen de hydrogène-oxygène

(30) Priority: 10.06.1991 GB 9112421
(43) Date of publication of application: 16.12.1992
(73) Proprietor: SHELL INTERNATIONALE RESEARCH MAATSCHAPPIJ B.V., 2596 HR Den Haag (NL)
(72) Inventor: Quint, Edwinus Nicolaas Maria c/o SHELL, NL-2288 GD Rijswijk (NL); Worrall, Robert Nicholas c/o SHELL, NL-2288 GD Rijswijk (NL); Staal, Jacobus Johannes Wilhelmus c/o SHELL, NL-2288 GD Rijswijk (NL)

(56) References cited:
- GB-A- 2 231 152
- US-A- 3 587 775
- US-A- 4 706 228

## Description

The present invention relates to a hydrogen-oxygen acoustic logging device for generating acoustic waves in a borehole.

In particular the invention relates to a hydrogen-oxygen acoustic logging device for generating acoustic waves for logging a subsurface formation when arranged in a borehole through said formation, said device comprising an inflatable compartment containing water, electrodes and firing means, respectively being for electrolyzing water to a gaseous hydrogen-oxygen mixture thereby inflating said compartment and for firing said gaseous mixture for generating said waves.

From US patent 3,587,775 a seismic acoustic source is known which generates sound waves by electrolytically dissociating water into gaseous hydrogen and oxygen. In a next step said components are allowed to recombine, explosive circumstances being created and resulting in said waves. The source has been built in a tubular housing hung up on a wireline cable fully free from the borehole wall.

A portion of the outer wall of said housing is made from a flexible material, thus defining an annular compartment. Surface equipment provides both dissociating and firing power. The ends of said portion are clamped firmly to the outer wall of said housing whereas longitudinal slots in the tubular housing wall permit waves generated to travel outwardly through the borehole fluid and into the formation.

Although in such a way a relatively compact device is designed, furthermore operable and firable repetitively at various levels in a borehole without requiring the addition of any material from the surface, many problems remain.

For example dissociating and firing will result in inflating the flexible wall portion throughout the slots. Thus the source cannot be considered pointlike. Moreover waves will propagate per se in all directions thus dividing power both in the direction of the borehole wall, and upwardly and downwardly into the borehole fluid.

The fact that said device can be employed only in a separate logging procedure instead of in combination with drilling operations is also considered a real disadvantage.

In US patent 2,679,205 a further seismic sound source generating waves similarly as shown above is presented, in particular comprising a compartment for a gaseous hydrogen-oxygen mixture, which compartment is flexible as a whole. Although in said document a more pointlike source device was designed also unpredictable sound direction compounds and disadvantageous power dissipation remain.

In US patent 4,207,619 a seismic well logging system and method are disclosed, in particular showing a source device arranged at the lower end of the drill bit string and capable of producing a sonic pulse. The pulses may be produced, for example, by induced vibrations, implosions, explosions, or sudden injections of fluid against the wall of the borehole. The source device is driven and controlled for example by a sequence timer whereas pulses are generated whenever the drilling operation is temporarily halted to add a new segment of drill pipe to the drill string. Thus measuring while drilling is carried out in a semi-continuous way. As a further feature pulses at a single level may be summed to enhance the distinction between the pulses and the noise generated by the engines associated with the drilling operations. This patent furthermore teaches that the above logging method uses surface detector systems to detect the waves generated which have passed the subsurface formation, thereby having been refracted and/or reflected, resulting in formation mappings and drill steering information.

As will be understood easily, conventional conditions for arranging and driving a source device nearby the bit are very severe. High rotation speeds, severe drilling and grinding conditions, and noisy drill bit hammering onto the borehole bottom will occur.

Unless the fact that an overall method and related device for transmitting, receiving, and interpreting acoustical signal data from start to finish are presented in the above document difficulties met in arranging such a device near the drill bit are not addressed at all.

US-A-4,706,228 discloses a spark discharge acoustic pulse transducer for borehole operation having an insulating ceramic barrier which contains a small cross-section aperture separating two bodies of electrolyte through which the two zones of liquid make contact. An electrical arc discharge is caused to occur through the aperture to produce a transient pressure pulse and associated acoustic pulse which is coupled to the geologic formation at the borehole wall.

GB-A-2 231 152 discloses a device having a flexible impervious envelope filled with an electrolyte liquid, the flexible envelope extending in circumferential direction along the borehole wall and being internally provided with electrodes to generate a spark therein.

Thus, it is an object of the invention to present a method and a logging device enabling a substantially undisturbed and immediate transfer of acoustic power from the device into the subsurface formation.

It is a further object of the invention capable for creating acoustic pulses at any moment and at any borehole level desired as long as the drill operations continue.

It is another object of the invention to provide a method and a logging device to create pulses from near or on the drill bit which are clearly distinguishable from further noise, such as bit noise.

It is yet a further object of the invention to drive and control the logging device continuously and reliably.

In accordance with the invention there is provided a hydrogen-oxygen acoustic logging device for generating acoustic waves for logging a subsurface formation when arranged in a borehole through said formation, said device comprising an inflatable compartment containing water, electrodes and firing means, respectively for electrolyzing said water to a gaseous hydrogen-oxygen mixture thereby inflating said compartment and for firing said gaseous mixture for generating said waves, said device comprising a housing, having an outer wall facing a borehole wall portion, characterized in that said outer wall closely fits said borehole wall portion and is provided with a recess which contains said inflatable compartment and, when arranged in logging position against said borehole wall portion, defines a substantially closed wave generating chamber.

In a first embodiment of the invention said housing is a blade of a drill string stabilizer unit.

In a second embodiment of the invention said housing is a drill bit, advantageously a junk slot of the drill.

In said embodiments advantageously said recess comprises a bottom to which the inflatable compartment of said device is fastened.

By employing the device as indicated above, in particular the wave generating chamber restricted to a well defined position within the borehole, advantageously a clear pointlike acoustic sound source for logging purposes is obtained. Furthermore, said sound source separated from the borehole fluid column present in the borehole advantageously results in a well defined power transfer to the subsurface formation.

According to the invention there is also provided a method for logging a subsurface formation, comprising the steps of,
- lowering a logging device into a borehole, said device comprising a housing, an inflatable compartment with water, electrodes and firing means, said housing having an outer wall facing a borehole wall portion;
- arranging said device in the borehole;
- electrolyzing said water in order to obtain a gaseous hydrogen-oxygen-mixture;
- firing said mixture thereby obtaining acoustic waves; and
- detecting the waves after having passed said subsurface formation; characterized in that said outer wall closely fits to the borehole wall portion and is provided with a recess containing said inflatable compartment, and in that the device is arranged against said borehole wall so that said housing and said borehole wall define a substantially closed wave generating chamber.

The invention will now be described by way of example in more detail with reference to the accompanying drawings, in which:
Figure 1 is a perspective view on a first embodiment of the logging device in accordance with the invention, the logging device being housed within a drill string stabilizer unit;
Figures 2A, 2B and 2C present in more detail particulars of the embodiment shown in fig. 1, in that each of the figs. 2A to 2C shows a part of a cross-section taken perpendicular to the axis through said stabilizer unit; and
Figure 3 is a view on a second embodiment of the logging device in accordance with the invention, seen in axial direction from the bottom side of the borehole onto the drill bit outer end surface.

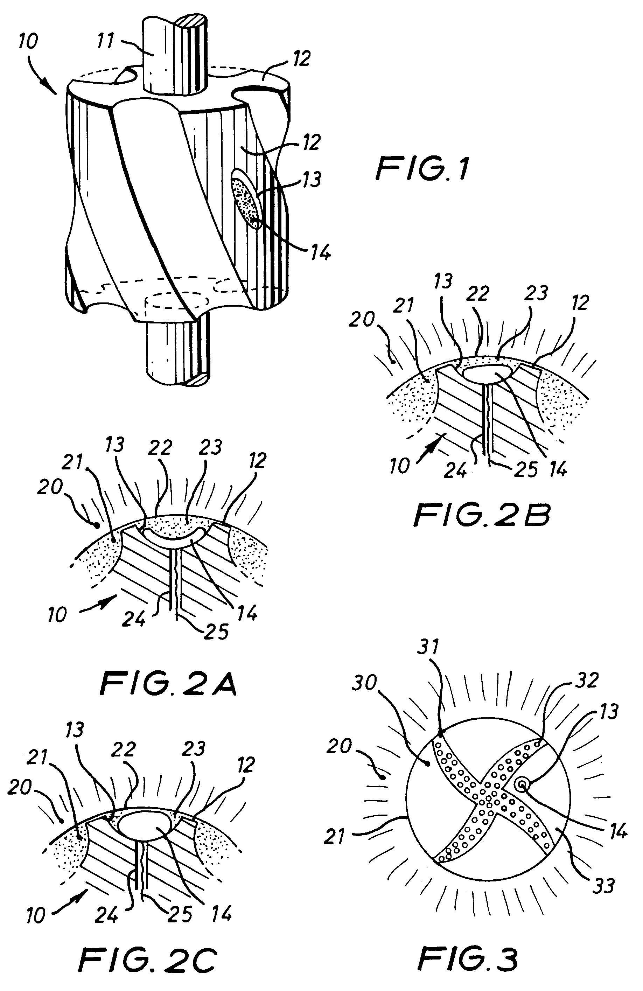

Referring to fig. 1 a perspective view on a first embodiment of the logging device in accordance with the invention presents a stabilizer unit 10 as part of a drill string assembly. Said unit 10 is connected to a drill string 11 (only partly shown). Said stabilizer unit 10 comprises a plurality of stabilizer blades 12, for example four blades as shown in this figure. Moreover said blades have outer walls which face the cylindrical borehole wall and which are closely fitting thereto. Consequently, indicated by its name, the blades are centralizing and stabilizing the drill string, in that said blades are closely contacting and sliding along a portion of the borehole wall, being substantially cylindrical.

In particular a recess is arranged within such a blade 12, which functions as a housing for said recess, which is positioned per se adjacent to the cylindrical borehole wall, and which thus defines a substantially closed chamber. Within said chamber-forming recess 13 an inflatable compartment 14 made of a flexible material is arranged. Said compartment functions as a source for generating acoustic waves.

As will be clear to those skilled in the art, although the recess mentioned above is arranged in a unit of a drill string assembly, a further embodiment of the present invention concerns a separate tool for logging a subsurface formation. Said tool will also have the above explained outer wall/cylindrical borehole wall-geometry and can be positioned against said borehole wall in a suitable way. For example said tool can be clamped by means of a spring or a clamping device which comprises hinging arms, foldable outwardly and inwardly.

Referring now to the figures 2A to 2C details of the above embodiments are shown in more detail.

In the cross-sections shown the stabilizer unit 10 is arranged in a borehole 21 which has been bored in subsurface formation 20. As can be seen in the figures 2A to 2C the stabilizer blade 12 as shown is arranged against borehole wall 22 thus centralizing and stabilizing the drill string as mentioned before (for reason of clarity only one blade 12 has been shown). For the separate tool embodiment similar figures can be presented.

When a drilling action is performed mud 23 will fill up the spacing left between said unit and the wall.

In said cross-sections, different inflation widths of said logging device compartments 14 are shown, representing respectively, in fig. 2A the compartment being empty, in fig. 2B the compartment being inflated, and in fig. 2C the compartment being in fired situation.

In all three figures 2A to 2C said device defines a substantially closed wave generating chamber between the blade and the borehole wall.

Said compartments 14 contain an amount of water, preferably made electrically conductible by a small addition of an electrolyte. For example a certain amount of potassium hydroxide is added to make the water electrically conductable to a sufficient extent. A pair of electrodes (not shown in the figures for reason of clarity) is positioned within said water in order to at least partly electrolyze said water to a gaseous hydrogen-oxygen mixture. In a further step said mixture is fired by means of a firing device also arranged within said compartment, resulting in an explosion which generates acoustic waves. After firing said hydrogen and oxygen will recombine to water and the wave generating cycle can be restarted.

Only by way of example in these figures 2A to 2C conduits 24 guiding electrical wires 25 to said compartment 14 are shown. Said wires 25 are connected to the above-mentioned electrodes and to the firing device. For example the electrical wires are coupled to the lower part of the compartment.

Advantageously the dimensions of the inflatable compartment are chosen in such a way that the compartment is unstretched in the fired situation. Thus no work or energy is used for inflating the compartment against its own elasticity. Furthermore, those skilled in the art will understand that, since the wave generating chamber is substantially closed and the mud is incompressible, the impulse created by firing the gaseous hydrogen-oxygen mixture is transferred immediately into the formation.

In fig. 3 a second embodiment of the logging device in accordance with the invention is shown. In axial direction from the bottom side of the borehole 21 in the subsurface formation 20 a drill bit 30 at its outer end surface is presented, to be understood as the projection of a hemispherical-like bit end surface onto the fig. plane. In detail said drill bit 30 comprises bit blades 31. Onto said bit blades, protruding from said hemispherical-like end surface, cutter elements 32, usually being elements of diamond, are arranged in order to bore the borehole by being rotated around its axis. Between said bit blades 31 junk slots 33 are completing the outer end surface of the bit.

Since at the one side the drill bit 30 continuously makes contact with the bottom of the borehole for further cutting into the subsurface formation and at the other side the circumference of the hemispherical-like end surface of the drill bit is closely fitting in the borehole against the borehole wall, also in this embodiment clearly a substantially closed wave generating chamber is defined between the surface of a junk slot 33, the respective bit blades 31 and the bottom part of the borehole. Advantageously, in accordance with the invention, a recess 13 comprising an inflatable compartment is arranged in such a junk slot. Driving such a logging device will correspond with that of the first embodiment.

As to the above-mentioned embodiments it is furthermore advantageous to fasten the inflatable compartment 14 to the bottom of the recess 13. Thus, since the compartment is compressed by the hydrostatic pressure of the mud column within the borehole, damage of the compartment by scraping along the borehole wall is avoided.

Because of the fact that the compartment has to be inflated against the hydrostatic compression forces it is made of a suitable flexible and elastic material such as rubber, a plastic material, or even a metal such as sheet of a suitable metal, for example steel.

Dependent on the geometry of the recess an inflatable compartment formed as a bellows can be arranged. For example in the drill bit embodiment such a bellows can be fastened advantageously to the bottom of a hollow cylindrical recess. Furthermore, in an axially extending cylindrical recess or slot, having an upper and lower end and facing the cylindrical borehole wall, an elongated compartment such as an elastic tyre section can be arranged and fastened with its end portions to said ends.

In this field of application many ways of employing such waves are known. Two main applications have to be taken into account.

Firstly, waves generated downhole can be detected by means of an array of detectors at the surface after the waves have passed the subsurface formation. Wave characteristics so detected will result in mappings of the subsurface formation surrounding, and also beneath, the borehole concerned obtained by direct travelling, reflecting and refracting waves. Said technique is mostly referred to as inverse vertical seismic profiling (IVSP). If this particular technique is used during a drilling operation it is called seismic while drilling (SWD).

Secondly, waves generated downhole can also be detected downhole by means of one or more detectors relatively close to or even alongside the logging device of the invention. In that case the environment nearby the source is logged in order to obtain information therefrom. For the situation that this technique is used during a drilling operation the data obtained could be relevant as to bit steering control. This technique is referred to as measuring, or logging, while drilling (MWD, LWD).

Further to the above embodiments advantageously at least one receiver for detecting the abovementioned acoustical waves is comprised in the logging device of the invention. Besides, in order to process the data obtained by said receiver a seismic data processing unit can be comprised also. As will be clear to those skilled in the art such a data processing unit can further comprise or even can be made up of a memory unit.

In a further advantageous embodiment of the invention, in particular when the logging device is arranged in a unit of the drilling assembly, the device is electrically driven by means of an in-situ arranged power generator. More in particular said power generator in turn is driven by a mud motor. Advantageously such way of driving overcomes great problems as presented when using wire lines during drilling caused by the rotation of the drilling assembly. It will be clear to those skilled in the art that since mud motors are widely available in many varieties effective coupling to the device employed can be obtained.

However, in case of employing the separate tool as mentioned above, a wireline connection to a surface generator can be used also.

Some preferred ways of employing the stabilizer device in accordance with the present invention can be indicated. Firstly, both to control steering a drill bit more closely and to remedy possibly generated tube waves (waves through the borehole column caused by reflections at the bottom of the borehole) the device is arranged advantageously in a stabilizer most nearby the drill bit, the so-called near drill bit stabilizer. Secondly, to fire and thereby to load the device symmetrically, a second device is arranged advantageously in the blade symmetrically positioned. Such an additional device may be powered electrically more economically.

For transmitting data widely known techniques such as mud pulse telemetry or electromagnetic pulsing can be used. Moreover, as soon as the drilling operations have been stopped, a wireline can be connected for further transmission of data, for example from said memory unit. A combination of mud motor driving and wireline transmission at the same time can be applied also.

Various modifications of the present invention will become apparent to those skilled in the art from the foregoing description and accompanying drawings. Such modifications are intended to fall within the scope of the appended claims.

## Claims

1. A hydrogen-oxygen acoustic logging device for generating acoustic waves for logging a subsurface formation when arranged in a borehole through said formation, said device comprising an inflatable compartment (14) containing water, electrodes (24) and firing means, respectively for electrolyzing said water to a gaseous hydrogen-oxygen mixture thereby inflating said compartment (14) and for firing said gaseous mixture for generating said waves, said device comprising a housing (12), having an outer wall facing a borehole wall portion (21), characterized in that said outer wall closely fits said borehole wall portion (21) and is provided with a recess (13) which contains said inflatable compartment (14) and, when arranged in logging position against said borehole wall portion (21), defines a substantially closed wave generating chamber.

2. The device as claimed in claim 1, wherein said housing (12) is a blade of a drill string stabilizer unit (10).

3. The device as claimed in claim 1, wherein said housing is a drill bit (30).

4. The device as claimed in claim 3, wherein said housing is a junk slot (33) of said drill bit (30).

5. The device as claimed in one of the foregoing claims, wherein said recess (13) comprises a bottom to which the inflatable compartment (14) is fastened.

6. The device as claimed in claim 1 or 2, wherein said recess (13) is an axially extending slot having an upper and lower end and wherein the inflatable compartment has an elongated form fastened to said ends.

7. The device as claimed in claim 2, wherein said drill string stabilizer unit (10) is the near drill bit stabilizer unit.

8. The device as claimed in any one of the foregoing claims, wherein said compartment (14) is formed as a bellows.

9. The device as claimed in claim 1, further comprising at least one receiver for detecting said waves after having passed said formation and representing seismic data.

10. The device as claimed in claim 1, wherein the device further comprises a seismic data processing unit.

11. The device as claimed in claim 10, wherein said processing unit is made up of a memory unit.

12. The device as claimed in claim 10 or 11, wherein said processing unit can transmit data to a surface station by mud pulse telemetry, wireline, or electromagnetic pulsing.

13. The device as claimed in claim 1, wherein the device is electrically driven by means of an in situ arranged power generator.

14. The device as claimed in claim 1, wherein the device is electrically driven through a wireline connected surface generator.

15. The device as claimed in claim 1, wherein the device is electrically driven by a combination of an in situ arranged power generator and a wireline connected surface generator.

16. The device as claimed in claim 13 or 14, wherein said in situ arranged power generator is driven by means of a mud motor.

17. A method for logging a subsurface formation, comprising the steps of,
- lowering a logging device into a borehole, said device comprising a housing (12), an inflatable compartment (14) with water, electrodes and firing means, said housing (12) having an outer wall facing a borehole wall portion (21);
- arranging said device in the borehole;
- electrolyzing said water in order to obtain a gaseous hydrogen-oxygen-mixture;
- firing said mixture thereby obtaining acoustic waves; and
- detecting the waves after having passed said subsurface formation; characterized in that said outer wall closely fits to the borehole wall portion (21) and is provided with a recess (13) containing said inflatable compartment (14), and in that the device is arranged against said borehole wall (21) so that said housing (12) and said borehole wall (21) define a substantially closed wave generating chamber (13).

## Patentansprüche

1. Wasserstoff-Sauerstoff-Schallmeßeinrich- tung zur Erzeugung von Schallwellen zum Messen einer unterirdischen Formation bei Anordnung in einem durch besagte Formation verlaufenden Bohrloch, wobei besagte Einrichtung ein aufblasbares steil (14) umfaßt, das Wasser, Elektroden (24) bzw. ein Zündmittel zum Elektrolysieren besagten Wassers zu einem gasförmigen Wasserstoff-Sauerstoff-Gemisch, wodurch das Abteil (14) aufgeblasen wird, und zum Zünden des besagten gasförmigen Gemischs zur Erzeugung besagter Wellen enthält, wobei besagte Einrichtung ein Gehäuse (12) mit einer einen Abschnitt (21) der Bohrlochwandung gegenüberliegenden Außenwandung umfaßt, dadurch gekennzeichnet, daß besagte Außenwandung eng an besagtem Abschnitt (21) der Bohrlochwandung anliegt und mit einer Ausnehmung (13) versehen ist, die besagtes aufblasbares Abteil (14) enthält und bei Anordnung in einer Meßposition an besagtem Abschnitt (21) der Bohrlochwandung eine im wesentlichen geschlossene wellenerzeugende Kammer definiert.

2. Einrichtung nach Anspruch 1, bei der das besagte Gehäuse (12) ein Blatt einer Bohrstrangstabilisiereinheit (10) ist.

3. Einrichtung nach Anspruch 1, bei der das besagte Gehäuse ein Bohrmeißel ist.

4. Einrichtung nach Anspruch 3, bei der das besagte Gehäuse ein Abfallschlitz (33) des besagten Bohrmeißels (30) ist.

5. Einrichtung nach einem der vorhergehenden Ansprüche, bei der die besagte Ausnehmung (13) einen Boden umfaßt, an dem das aufblasbare Abteil (14) befestigt ist.

6. Einrichtung nach Anspruch 1 oder 2, bei der die besagte Ausnehmung (13) ein axial verlaufender Schlitz mit einem oberen und einem unteren Ende ist und bei der das aufblasbare Abteil eine an besagten Enden befestigte längliche Form aufweist.

7. Einrichtung nach Anspruch 2, bei der es sich bei besagter Bohrmeißelstabilisiereinheit (10) um die nahegelegene Bohrmeißelstabilisiereinheit handelt.

8. Einrichtung nach einem der vorhergehenden Ansprüche, bei der das besagte Abteil (14) als Balg ausgebildet ist.

9. Einrichtung nach Anspruch 1 mit weiterhin mindestens einem Empfänger zum Erfassen besagter Wellen, nachdem diese die besagte Formation durchlaufen haben und seismische Daten darstellen.

10. Einrichtung nach Anspruch 1, wobei sie weiterhin eine Verarbeitungseinheit für seismische Daten umfaßt.

11. Einrichtung nach Anspruch 10, bei der die besagte Verarbeitungseinheit aus einer Speichereinheit besteht.

12. Einrichtung nach Anspruch 10 oder 11, bei der die besagte Verarbeitungseinheit durch Schlammimpulstelemetrie, Drahtleitung oder elektromagnetische Impulsgabe Daten an eine Station an der Oberfläche übertragen kann.

13. Einrichtung nach Anspruch 1, wobei sie von einem vor Ort angeordneten Stromgenerator elektrisch angetrieben wird.

14. Einrichtung nach Anspruch 1, wobei sie von einem durch eine Drahtleitung verbundenen Generator an der Oberfläche elektrisch angetrieben wird.

15. Einrichtung nach Anspruch 1, wobei sie von einer Kombination aus einem vor Ort angeordneten Stromgenerator und einem über eine Drahtleitung verbundenen Generator an der Oberfläche elektrisch angetrieben wird.

16. Einrichtung nach Anspruch 13 oder 14, bei der der besagte vor Ort angeordnete Stromgenerator mittels eines Schlammotors angetrieben wird.

17. Verfahren zur Messung unterirdischer Formationen mit den folgenden Schritten:
- Absenken einer Meßeinrichtung in ein Bohrloch, wobei besagte Einrichtung ein Gehäuse (12), ein aufblasbares Abteil (14) mit Wasser, Elektroden und ein Zündmittel umfaßt, wobei besagtes Gehäuse (12) eine einem Abschnitt (21) der Bohrlochwandung gegenüberliegende Außenwandung aufweist,
- Anordnen besagter Einrichtung in dem Bohrloch,
- Elektrolysieren besagten Wassers, um ein gasförmiges Wasserstoff-Sauerstoff-Gemisch zu erhalten,
- Zünden besagten Gemischs, wodurch Schallwellen erhalten werden, und
- Erfassung der Wellen, nachdem sie besagte unterirdische Formation durchlaufen haben, wobei besagte Außenwandung eng an besagtem Abschnitt (21) der Bohrlochwandung anliegt und mit einer Ausnehmung (13) versehen ist, die besagtes aufblasbares Abteil (14) enthält, und daß die Einrichtung derart an besagter Bohrlochwandung (21) angeordnet ist, daß besagtes Gehäuse (12) und besagte Bohrlochwandung (21) eine im wesentlichen geschlossene wellenerzeugende Kammer (13) definieren.

## Revendications

1. Dispositif de diagraphie acoustique à hydrogène-oxygène destiné à engendrer des ondes acoustiques pour diagraphier une formation souterraine lorsqu'il est agencé dans un trou de forage traversant ladite formation, ledit dispositif comportant un compartiment gonflable (14) contenant de l'eau, des électrodes (24) et des moyens de mise à feu, pour respectivement électrolyser ladite eau en mélange d'hydrogène-oxygène gazeux en gonflant par conséquent ledit compartiment (14) et mettre à feu ledit mélange gazeux pour engendrer lesdites ondes, ledit dispositif comportant un boîtier (12), ayant une paroi extérieure située en vis-à-vis d'une partie (21) de paroi du trou de forage, caractérisé en ce que ladite paroi extérieure est agencée à proximité étroite de ladite partie (21) de paroi de trou de forage et est munie d'une cavité (13) qui contient ledit compartiment gonflable (14) et, lorsqu'agencée en position de diagraphie contre ladite partie (21) de paroi de trou de forage, définit une chambre pratiquement fermée engendrant une onde.

2. Dispositif selon la revendication 1, dans lequel ledit boîtier (12) est une lame d'ensemble stabilisateur (10) de ligne d'outil.

3. Dispositif selon la revendication 1, dans lequel ledit boîtier est un trépan (30).

4. Dispositif selon la revendication 3, dans lequel ledit boîtier est une goujure (33) dudit trépan (30).

5. Dispositif selon l'une quelconque des revendications précédentes, dans lequel ladite cavité (13) constitue un fond sur lequel le compartiment gonflable (14) est fixé.

6. Dispositif selon la revendication 1 ou 2, dans lequel ladite cavité (13) est une fente s'étendant axialement ayant une extrémité supérieure et une extrémité inférieure et dans lequel le compartiment gonflable a une forme allongée fixée auxdites extrémités.

7. Dispositif selon la revendication 2, dans lequel ledit ensemble stabilisateur (10) de ligne d'outil est un ensemble stabilisateur proche du trépan.

8. Dispositif selon l'une quelconque des revendications précédentes, dans lequel ledit compartiment (14) est constitué sous forme de soufflet.

9. Dispositif selon la revendication 1, comportant en outre au moins un récepteur destiné à détecter lesdites ondes après qu'elles aient passé ladite formation et représentant des données sismiques.

10. Dispositif selon la revendication 1, dans lequel le dispositif comporte en outre une unité de traitement de données sismiques.

11. Dispositif selon la revendication 10, dans lequel ladite unité de traitement est constituée d'une unité de mémoire.

12. Dispositif selon la revendication 10 ou 11, dans lequel ladite unité de traitement peut transmettre des données vers un poste de surface par télémétrie d'impulsions de boue, par lignes électriques, ou par impulsions électromagnétiques.

13. Dispositif selon la revendication 1, dans lequel le dispositif est entraîné électriquement par l'intermédiaire d'un générateur de puissance agencé in situ.

14. Dispositif selon la revendication 1, dans lequel le dispositif est entraîné électriquement par l'intermédiaire d'une ligne électrique reliée à un générateur de surface.

15. Dispositif selon la revendication 1, dans lequel le dispositif est entraîné électriquement par une combinaison constituée d'un générateur de puissance agencé in situ et d'une ligne électrique reliée à un générateur de surface.

16. Dispositif selon la revendication 13 ou 14, dans lequel ledit générateur de puissance agencé in situ est entraîné par l'intermédiaire d'un moteur à boue.

17. Procédé pour diagraphier une formation souterraine, comportant les étapes consistant à :
- abaisser un dispositif de diagraphie à l'intérieur d'un trou de forage, ledit dispositif comportant un boîtier (12), un compartiment gonflable (14) muni d'eau, des électrodes et des moyens de mise à feu, ledit boîtier (12) ayant une paroi extérieure dirigée en vis-à-vis d'une partie (21) de paroi du trou de forage,
- agencer ledit dispositif dans le trou de forage,
- électrolyser ladite eau afin d'obtenir un mélange gazeux d'hydrogène et d'oxygène,
- mettre à feu ledit mélange en obtenant ainsi des ondes acoustiques, et
- détecter les ondes après qu'elles aient passé ladite formation souterraine, caractérisé en ce que ladite paroi extérieure est agencée de manière étroite dans la partie (21) de paroi du trou de forage et est munie d'une cavité (13) contenant ledit compartiment gonflable (14), et en ce que le dispositif est agencé contre ladite paroi (21) du trou de forage de telle sorte que ledit boîtier (12) et ladite paroi (21) du trou de forage définissent une chambre (13) pratiquement fermée engendrant des ondes.
